# EUROPÄISCHE PATENTSCHRIFT

(11) **EP 0 687 619 B1**
(45) Veröffentlichungstag und Bekanntmachung des Hinweises auf die Patenterteilung: **25.03.1998**
(21) Anmeldenummer: 95109074.5
(22) Anmeldetag: 13.06.1995
(51) Int. Cl.: B62H 3/04, B62H 3/00

(54) **Fahrradparker-Reihenanlage**
Supports for parking bicycles
Support de stationnement pour bicyclettes

(30) Priorität: 19.06.1994 DE 9409746 U; 25.08.1994 DE 4430170
(43) Veröffentlichungstag der Anmeldung: 20.12.1995
(73) Patentinhaber: ORION Bausysteme GmbH, 64584 Biebesheim (DE)
(72) Erfinder: Suckow, Frank, Dipl.-Ing., D-64584 Biebesheim (DE)
(74) Vertreter: Helber, Friedrich G., Dipl.-Ing.

(56) Entgegenhaltungen:
- DE-U- 8 801 595
- DE-U- 9 006 455
- DE-U- 9 404 105

## Beschreibung

Die Erfindung betrifft eine Fahrradparker-Reihenanlage aus einer Anzahl von Einzel- oder Doppel-Parkern, die jeweils einen in einer senkrechten Ebene angeordneten, aus Rohrmaterial gebogenen Ständer aufweisen, der sich mit dem freien Ende wenigstens eines, vorzugsweise zweier Stützschenkel auf dem Boden abstützt oder in den Boden eingelassen ist, wobei einander zugeordnete Stützschenkel der Ständer benachbarter Parker durch horizontale Verbindungs-Rohrabschnitte verbunden sind, deren freie Enden jeweils am Stützschenkel eines der Parker befestigt sind.

Fahrräder kommen in neuerer Zeit - auch aufgrund des gestiegenen Umweltbewußtseins - in zunehmendem Maße wieder in Gebrauch als Einzelbeförderungs und Transportmittel für Einkäufe in Städten. Dementsprechend müssen im innerstädtischen Bereich durch die Gemeinden oder auch die interessierte Geschäftswelt Abstellmöglichkeiten für Fahrräder geschaffen werden. Auch an Bahnhöfen (Park-and-Ride-Stationen), Schwimmbädern, Freizeitzentren, Sportanlagen, Schulen, Universitäten etc. werden in zunehmendem Maße Abstellmöglichkeiten für Fahrräder benötigt, in denen die Fahrräder gegen Beschädigung geschützt und gegen Diebstahl sicher anschließbar eingestellt werden können. Insbesondere dort, wo mit Abstellbedarf für eine größere Anzahl von Fahrrädern zu rechnen ist, werden Fahrradparker-Reihenanlagen der eingangs erwähnten Art vorgesehen, wobei die Fahrradparker zur Vermeidung von Diebstahl oder auch von Beschädigungen durch den in jüngerer Zeit in zunehmendem Maße beobachteten Vandalismus o.dgl. entweder durch Einbetonieren der senkrechten Stützschenkel oder eine nur schwer lösbare Verdüblung von Fußplatten am unteren Ende der Stützschenkel befestigt werden. Grundsätzlich haben sich solche Reihenanlagen bewährt, wobei aber - wie bereits erwähnt - das Problem von zunehmendem Vandalismus, d.h. mutwilliger Beschädigung, gegeben ist. Dem muß durch eine besonders stabile Ausgestaltung der Parker-Reihenanlage entgegengewirkt werden. Ein weiteres Problem betrifft die Tatsache, daß solche Reihenanlagen so ausgestaltet sein müssen, daß die in sie eingestellten Fahrräder gegen Umkippen sicher gehalten werden müssen, ohne daß es hierbei durch Einquetschung der Felgen des Vorderrades zu Beschädigungen kommt. Bewährt haben sich in diesem Zusammenhang Einzel- bzw. Doppelfahrradparker der eingangs erwähnten Art, bei denen an dem aus Rohrmaterial gebogenen metallischen Ständer mit Abstand vom Boden ein Seitenbügel an den Stützschenkel angebracht ist, der zwischen sich und dem Standbügel einen Einschubraum für das Vorderrad eines zu halternden Fahrrades schafft. Bei der Ausbildung als Doppelparker sind die Seitenbügel auf den gegenüberliegenden Seiten des Ständers so angeordnet, daß die Fahrräder von entgegengesetzten Seiten aus in den Zwischenraum zwischen dem Ständer und den Seitenbügeln eingeschoben werden können. Um zu verhindern, daß das eingeschobene Vorderrad im Zwischenraum zwischen dem Seitenbügel und dem Ständer verkippen kann, ist außerdem in der Nähe des Bodens noch ein seitlich geschlossener an den beiden Stützschenkeln befestigter Standbügel vorgesehen. Wenn diese bewährte Fahrradparker zu Reihenanlagen zusammengeschlossen werden sollen, werden die Stützschenkel benachbarter Standbügel durch bodennahe Verbindungs-Rohrabschnitte verbunden, wobei zur Erhöhung der Aufnahmekapazität der Reihenanlage und zur Verringerung des Verbrauchs an Bodenfläche benachbarte Fahrradparker in der Regel so ausgestaltet sind, daß in Aufeinanderfolge einstellbare Fahrräder abwechselnd mit angehobenem Vorderrad und auf dem Boden aufgesetzten Vorderrad in die Parker eingestellt werden. Für die in solchen Reihenanlagen verwendeten Parker, bei denen die Vorderräder angehoben werden müssen, werden die geschilderten Fahrradparker praktisch unverändert übernommen, wobei lediglich die unteren Enden der Stützschenkel so verlängert werden, daß die seitlichen Vorderrad-Aufnahmebügel entsprechend vom Boden abgehoben sind. Bei den jeweils dazwischenliegenden Parkern, bei denen das Vorderrad des eingestellten Fahrrades in Bodenhöhe bleiben soll, ist die Anbringung der Vorderrad-Aufnahmebügel nur bedingt möglich, weil in diesem Bereich die die Stützschenkel benachbarter Parker verbindenden Verbindungs-Rohrabschnitte angesetzt werden. Für die Vorderräder der in den tiefer stehenden Parkern zu halternden Fahrräder ist also keine seitliche Halterung durch einen Vorderrad-Aufnahmebügel gegeben und es kann in Einzelfällen vorkommen, daß ein eingestelltes Fahrrad seitlich wegkippt, wobei Beschädigungen der Felgen des Vorderrades insbesondere dann zu befürchten sind, wenn die Kippbewegung des Fahrrades vom eigenen Standbügel weg erfolgt, d.h. die Quetschung der Felge am Seitenbügel auftritt. Bei entgegengesetztem Kippen wirkt der hoch aufragende Ständer wie ein Anlehnbügel, so daß dann Beschädigungen der Felge nicht oder nur dann, wenn der Kippwinkel zu stark wird, zu befürchten sind.

Der Erfindung liegt die Aufgabe zugrunde, Fahrradparker-Reihenanlagen der eingangs erwähnten Art so auszugestalten, daß sichergestellt ist, daß die in sie eingestellten Fahrräder eine hohe Standsicherheit erhalten und trotzdem felgenschonend benutzt werden können. Darüber hinaus sollen sie durch eine entsprechend stabile Verbindung ihrer Teile in besonderem Maße widerstandsfähig gegen Vandalismus ausbildbildbar sein.

Ausgehend von einer Fahrradparker-Reihenanlage der eingangs erwähnten Art wird diese Aufgabe erfindungsgemäß dadurch gelöst, daß im Befestigungsbereich der Verbindungs-Rohrabschnitt mit den Stützschenkeln ein im Bereich des jeweiligen Stützschenkels über die Höhe der Rohrabschnitte nach oben vorstehendes Verbindungselement angeordnet ist, welches von seinem höchsten Punkt aus mit einer jeweils schräg verlaufenden Begrenzungskante zu den anschließenden Verbindungs-Rohrabschnitten herabgeführt ist. Das Verbindungselement, dessen schräg verlaufende Begrenzungskanten Führungen für die eingeschobenen Vorderräder der zu halternden Fahrräder in dem Sinne bilden, daß die Fahrräder in eine in Richtung zum Ständer gerichtete Neigung gebracht werden und so ein Wegkippen in entgegengesetzter Richtung, d.h. vom zugeordneten Ständer weg, mit Sicherheit vermieden wird, kann auch zur zusätzlichen Verstärkung der Befestigung der Verbindungs-Rohrabschnitte und der Stützschenkel dienen.

Das Verbindungselement wird zweckmäßig an den Verbindungs-Rohrabschnitten und in vorteilhafter Weiterbildung der Erfindung dann auch am Stützschenkel befestigt.

In einer bevorzugten Ausgestaltung der Erfindung sind die Verbindungselemente in ihren zu den Verbindungs-Rohrabschnitten herabgeführten Endbereiche mit jeweils einem über die Verbindungs-Rohrabschnitte nach oben vortretenden, einen das seitliche Wegrutschen des Vorderrades eines eingestellten Fahrrades verhindernden Seitenanschlag bildenden Ansatz versehen.

Die Verbindungselemente sind in bevorzugter Weiterbildung der Erfindung als Knotenbleche ausgebildet, welche die grundsätzliche Form eines gleichschenkligen Dreiecks haben, dessen Hypotenuse im wesentlichen in Höhe der unteren Begrenzung der Verbindungs-Rohrabschnitte verläuft, während die Katheten die schräg verlaufenden Begrenzungskanten bilden.

Die Seitenanschlag-Ansätze sind dann jeweils im Bereich des Zusammentreffens der Katheten mit der Hypotenuse integral am Knotenblech angeschnitten.

Das Knotenblech kann jeweils mittels Befestigungsschrauben am Stützschenkel und/oder den Verbindungs-Rohrabschnitten befestigt sein, wobei die Gewindeschäfte der Befestigungsschrauben durch Durchgangsöffnungen in den Knotenblechen hindurch in den jeweiligen Stützschenkel bzw. Verbindungs-Rohrabschnitt eingeschraubt sind.

Dabei wird eine zusätzliche Versteifung des Knotenblechs und eine Sicherung gegen ungewolltes Herausschrauben der Befestigungsschrauben dann erhalten, wenn im unteren hypotenusenseitigen Bereich des Knotenblechs unterhalb jeder Kathete jeweils ein etwa rechtwinklig umgekanteter streifenförmiger Flanschabschnitt angesetzt ist, welcher an der Unterseite der Verbindungs-Rohrabschnitte anliegt. Die Befestigung des Knotenblechs an den Verbindungs-Rohrabschnitten erfolgt dann zweckmäßig dadurch, daß die Durchgangsöffnungen in den umgekanteten Flanschabschnitten vorgesehen werden, so daß die Befestigungsschrauben also von unten in die Verbindungs-Rohrabschnitte eingeschraubt werden und so gegen mutwilliges Herausdrehen durch Unbefugte weitgehend gesichert sind.

Die Durchgangsöffnungen im Knotenblech selbst können - zum Ausgleich von Herstellungs- oder Montageungenauigkeiten - als Langlöcher ausgebildet sein.

Wenn die Befestigung der Verbindungs-Rohrabschnitte mit dem zugeordneten Stützschenkel des Ständer durch am Stützschenkel befestigte, passend in die offenen Enden der Verbindungs-Rohrabschnitte eingreifende stopfenartige Verbindungsmuffen (DE-GM 90 12 662.9) erfolgt, werden die Schäfte der Befestigungsschrauben zweckmäßig durch Öffnungen im Knotenblech und dem jeweiligen Verbindungs-Rohrabschnitt hindurch in eine Gewindebohrung in der jeweiligen Verbindungsmuffe eingeschraubt. Es bietet sich dann an, zur Befestigung des Knotenblechs und des Verbindungs-Rohrabschnitts jeweils die gleiche Verbindungsschraube zu verwenden.

Die von den Katheten des dreieckigen Knotenblechs gebildeten schräg verlaufenden Begrenzungskanten und/oder die dem Stützschenkel zugewandten Begrenzungskanten der Seitenanschlag-Ansätze sind - zur Vermeidung von Beschädigungen des Gummis der Decken des Vorderrades des einzustellenden Rades - zweckmäßig entgratet und/oder angefast bzw. abgerundet.

Alternativ können von den die Katheten des dreieckigen Knotenblechs bildenden schräg verlaufenden Begrenzungskanten einstückig angeschnittene Streifen des Blechmaterials umgekantet sein. Beim Abgleiten des Vorderrades in die bestimmungsgemäße, zum Ständer geneigte Lage können dann keine scharfen Kanten auf das Gummimaterial des Vorderrades des eingestellten Fahrrades einwirken.

Auch von der dem Stützschenkel zugewandten Begrenzungskante des Seitenanschlag-Ansatzes kann in gleicher Weise ein einstückig angeschnittener Streifen des Blechmaterials des Knotenblechs umgekantet sein.

Wenn bei Verwendung der oben geschilderten bekannten Doppelparker (DE-GM 87 15 865.5) oberhalb der Verbindungs-Rohrabschnitte an einem der Stützschenkel des Ständers jeweils ein das Vorderrad eines einzustellenden Fahrrades auf der dem Ständer gegenüberliegenden Seite umgreifender Seitenbügel vorgesehen ist, ist der lichte Abstand der dem Stützschenkel zugewandten Begrenzungskante des Seitenanschlag-Ansatzes vom zugeordneten Stützschenkel vorzugsweise wenigstens gleich dem lichten Abstand zwischen dem Stützschenkel und dem jeweiligen Seitenbügel gewählt. Damit ist sichergestellt, daß die Neigung des Vorderrades und somit des eingestellten Fahrrades in Richtung zum Ständer nicht so groß werden kann, daß die Felge des Vorderrades auf der ständerabgewandten Seite in Klemmeingriff mit dem Seitenbügel kommt.

Anstelle der vorstehend beschriebenen, als Knotenblech aus Metall ausgebildeten Verbindungselemente können die Verbindungselemente auch als Kunststoff-Spritzgußteile oder als Metall-Gußteile ausgebildet sein.

Dabei empfiehlt es sich dann, die Verbindungselemente derart zweiteilig auszubilden, daß sie den Verbindungsbereich des jeweiligen Stützschenkels mit dem Endbereich des anschließenden Verbindungs-Rohrabschnitts jeweils an der Vorder- bzw. Rückseite zumindest teilweise übergreifen, und daß der vorder- und rückseitige Teil des Verbindungselements dann in der bestimmungsgemäßen Befestigungsstellung miteinander verbunden werden.

Die miteinander verbundenen Teile des Verbindungselements können dann so ausgestaltet sein, daß sie einen senkrechten, den Stützschenkel über höchstens 180° seitlich umgreifenden und einen waagerechten den zugeordneten Verbindungs-Rohrabschnitt über mehr als 180° von der Oberseite aus umgreifenden Klemmabschnitt aufweisen, wobei die die schräge Begrenzungskante bildenden Abschnitte sowie die den gegebenenfalls vorgesehenen Seitenanschlag-Ansatz bildenden Abschnitt der Verbindungselement-Teile jeweils integral an den Klemmabschnitten angesetzt sind.

Die Verbindung der Teile des Verbindungselements in der bestimmungsgemäßen Befestigungsstellung kann durch Verschrauben oder auch durch Verrasten von formschlüssig miteinander in Eingriff bringbaren komplementären Vorsprüngen und Ausnehmungen in den Verbindungselement-Teilen erfolgen.

Ein weiter abgewandeltes Ausführungsbeispiel der Erfindung kann so ausgebildet sein, daß das Verbindungselement ein jeweils im Befestigungsbereich eines Verbindungs-Rohrabschnitts mit dem zugeordneten Stützschenkel befestigbares langgestrecktes Basiselement aufweist, auf dessen dem Verbindungs-Rohrabschnitt abgewandter Oberseite ein Abschnitt eines langgestreckten metallischen Profilmaterials befestigt - beispielsweise aufgeschweißt - ist, welcher von seinem vom Stützschenkel entfernten Befestigungsbereich auf dem Basiselement aus schräg nach oben zum Stützschenkel verläuft und so mit seiner dem Basiselement abgewandten Seite die schräg verlaufende Begrenzungskante bildet.

Außerdem kann auch hier wieder ein Seitenanschlag-Ansatz vorgesehen sein, welcher dadurch gebildet wird, daß auf der stützschenkelabgewandten Seite des Befestigungsbereichs des schräg verlaufenden Profilmaterial-Abschnitts auf dem Basiselement ein ebenfalls von einem Abschnitt eines metallischen Profilmaterials gebildeter, den Seitenanschlag bildender Ansatz angeordnet ist.

Der den Seitenanschlag-Ansatz bildende Profilelement-Abschnitt kann dabei von einer Reihe von Teilabschnitten gebildet werden, von denen der erste Teilabschnitt vom Basiselement nach oben vortritt, während der sich anschließende Teilabschnitt in Richtung vom schräg verlaufenden Profilelement-Abschnitt weg und der nachfolgende Teilabschnitt zum Basiselement zurückgekantet oder gebogen und am Basiselement befestigt ist.

Am stützschenkelseitigen oberen Ende des die schräg verlaufende Begrenzungskante bildenden Profilmaterial-Abschnitt ist zweckmäßig ein parallel zum Stützschenkel senkrecht nach unten bis zum Basiselement geführter Abschnitt des Profilmaterials angesetzt, dessen unteres Ende auf dem Basiselement befestigt ist.

In diesem parallel zum Stützschenkel zum Basiselement geführten Profilmaterial-Abschnitt kann dann eine Befestigungsbohrung für den Schaft einer in eine Bohrung des Stützschenkels befestigbaren Befestigungsschraube o.dgl. vorgesehen sein.

Die Profilmaterial-Abschnitte des Verbindungselements sind in bevorzugter Ausgestaltung der Erfindung integrale Teile eines langgestreckten Metallprofils, welche also vor seiner Befestigung auf dem Basiselement so gekantet oder gebogen wird, daß die Profilmaterial-Abschnitte entstehen.

Das Basiselement wird zweckmäßig von einer in ihrem Querschnitt kreisabschnittsförmig gewölbten metallischen Fußplatte gebildet, wobei der Radius der dem Verbindungs-Rohrabschnitt zugewandten Seite der Fußplatte etwa gleich dem Radius der Außenfläche des zugeordneten Verbindungs-Rohrabschnitts gewählt ist. Die kreisabschnittsförmige Wölbung des Querschnitts der Fußplatte erstreckt sich dabei über einen Winkel von maximal 180°, um das Verbindungselement bei der Montage ohne Klemmung auf dem Verbindungs-Rohrabschnitt aufsetzen zu können.

Zur Befestigung des Basiselements auf dem Verbindungs-Rohrabschnitt kann im Bereich unterhalb des schräg verlaufenden Profilmaterial-Abschnitts etwa mittig eine Befestigungsbohrung für den Schaft einer Befestigungsschraube vorgesehen sein. Dabei ist die Lage der Befestigungsbohrung im Basiselement zweckmäßig so gewählt, daß sie mit einer im zugeordneten Verbindungs-Rohrabschnitt ohnehin vorgesehenen Befestigungsbohrung fluchtet. Basiselement und Verbindungs-Rohrabschnitt können dann gemeinsam mit einer Befestigungsschraube mit der die Verbindung des Verbindungs-Rohrabschnitts mit dem Stützschenkel herstellenden Muffe verschraubt werden.

Die Befestigungsbohrung im Basiselement wird zum Ausgleich von eventuellen Ungenauigkeiten dann zweckmäßig als parallel zur Längsmittelachse des zugeordneten Verbindungs-Rohrabschnitts verlaufendes Langloch ausgebildet.

Das für die Bildung der einzelnen Metallprofil-Abschnitte verwendete Metallprofil kann als Flach-, Rund- oder Rohrprofil ausgebildet sein.

Die Erfindung ist in der folgenden Beschreibung in Verbindung mit der Zeichnung näher erläutert, und zwar zeigt:
- Fig. 1: eine schematische Ansicht eines Ausschnitts einer Fahrradparker-Reihenanlage der hier in Frage stehenden Art;
- Fig. 2: eine Ansicht der Anlage, gesehen in Richtung des Pfeils 2 in Fig. 1;
- Fig. 3: eine in vergrößertem Maßstab gezeigte Teilansicht des Verbindungsbereichs eines Stützschenkels mit einem Verbindungs-Rohrabschnitt durch ein in der erfindungsgemäßen Weise ausgebildetes Knotenblech;
- Fig. 4: eine Ansicht des in Fig. 3 vewendeten Knotenblechs;
- Fig. 5: eine in der Blickrichtung der Fig. 3 entsprechende Ansicht des Verbindungsbereichs eines Stützschenkels mit einem Verbindungs-Rohrabschnitt unter Verwendung eines gegenüber dem in Fig. 4 gezeigten Knotenblech abgewandelten Knotenblechs;
- Fig. 6: eine Ansicht, gesehen in Richtung des Pfeils 6 in Fig. 5;
- Fig. 7: das abgewandelte Knotenblech in Blickrichtung auf eine seiner Flachseiten;
- Fig. 8: eine Ansicht des Knotenblechs, gesehen in Richtung des Pfeils 8 in Fig. 7;
- Fig. 9: eine Ansicht des Knotenblechs, gesehen in Richtung des Pfeils 9 in Fig. 7;
- Fig. 10: eine Seitenansicht eines als Kunststoff-Spritzgußteil ausgebildeten Ausführungsbeispiels eines Verbindungselements zur Verbindung eines Stützschenkels mit einem Verbindungs-Rohrabschnitt;
- Fig. 11: eine Ansicht des Verbindungselements gesehen in Richtung des Pfeils 11 in Fig. 10;
- Fig. 12: eine Ansicht des Verbindungselements gesehen in Richtung des Pfeils 12 in Fig. 10;
- Fig. 13: eine Ansicht gesehen in Richtung des Pfeils 13 in Fig. 10;
- Fig. 14: eine Schnittansicht in der durch die Pfeile 14-14 in Fig. 10 angegebene Schnittebene;
- Fig. 15: eine Seitenansicht eines weiteren Ausführungsbeispiels eines Verbindungselements;
- Fig. 16: eine Ansicht des Verbindungselements, gesehen in Richtung des Pfeils 16 in Fig. 15;
- Fig. 17: eine Ansicht des Verbindungselements, gesehen in Richtung des Pfeils 17 in Fig. 15; und
- Fig. 18: eine Schnittansicht in der durch die Pfeile 18-18 in Fig. 15 veranschaulichten Schnittebene.

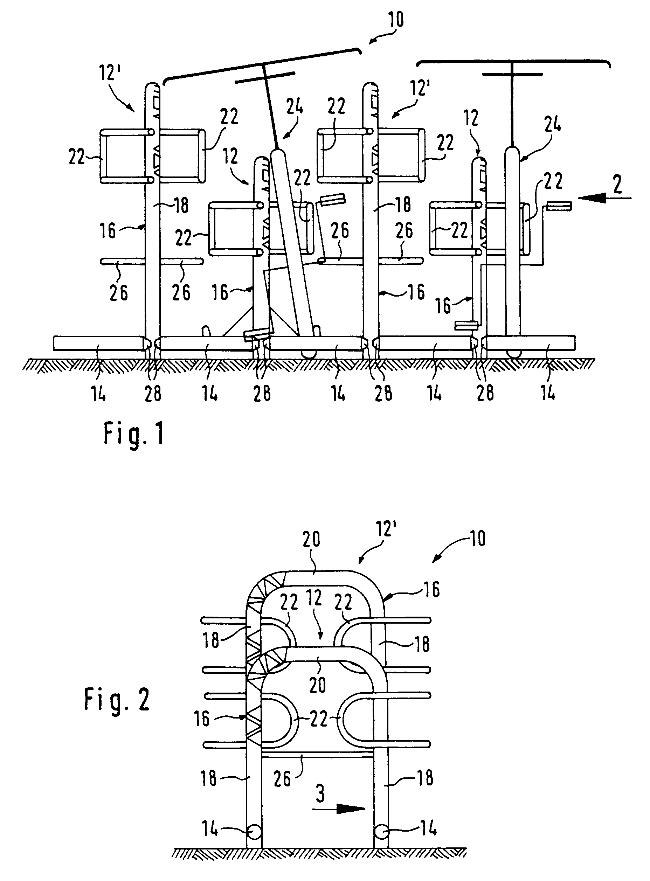

Die in den Figuren 1 und 2 gezeigte, in ihrer Gesamtheit mit 10 bezeichnete Fahrradparker-Reihenanlage weist eine Vielzahl von abwechselnd seitlich versetzt angeordneten Doppelparkern 12, 12' auf, die durch Verbindungs-Rohrabschnitte 14 in vorgegebenem Abstand zueinander gehalten sind. Die Doppelparker 12 und 12' sind in bekannter Weise so ausgebildet, daß sie jeweils einen aus Rohrmaterial gebogenen U-förmigen Ständer 16 aufweisen. Diese Ständer 16 sind in umgekehrter, d.h. mit den freien Enden der beiden U-Schenkel nach unten zum Boden weisender Position in seitlich zueinander versetzten parallelen senkrechten Ebenen angeordnet, wobei die U-Schenkel also Stützschenkel 18 bilden, die an ihrem oberen Ende durch einen Stegabschnitt 20 verbunden sind. Auf den gegenüberliegenden Seiten der Ständer 16 ist jeweils ein an einem der beiden Stützschenkel 16 angebrachter Seitenbügel 22 vorgesehen, welche sich in seitlichem Abstand vom Ständer 16 parallel zu diesem erstrecken, so daß in den zwischen dem Ständer und jedem Seitenbügel gebildeten Zwischenraum das Vorderrad eines Fahrrades 24 einstellbar ist, und zwar sind die Seitenbügel 22 jeweils an verschiedenen Stützschenkeln 18 des gleichen Ständers vorgesehen, so daß die Fahrräder 24 - aus Gründen der Raumökonomie - von entgegengesetzten Seiten aus in den Zwischenraum zwischen den Seitenbügeln und dem Ständer eingestellt werden.

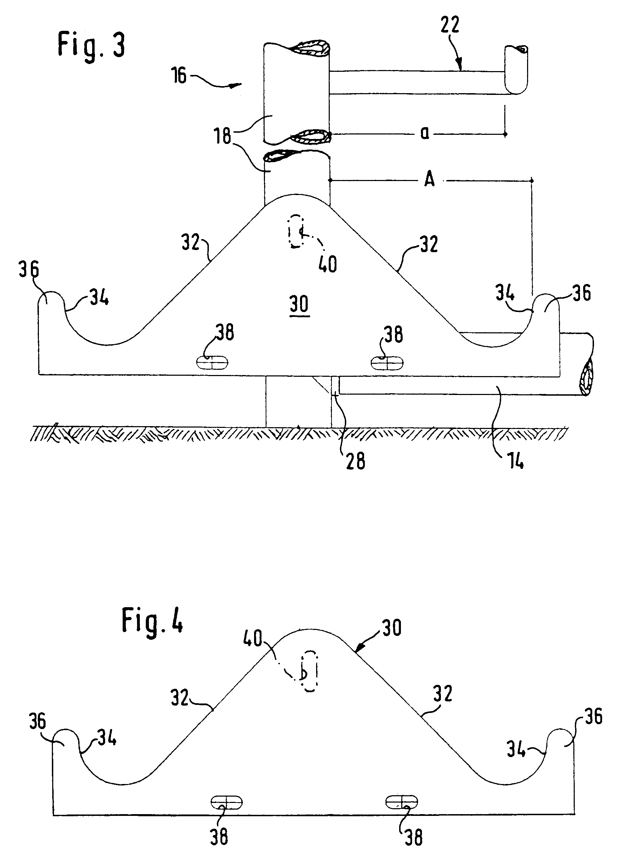

In der Reihenanlage 10 sind abwechselnd Doppelparker 12 und 12' angeordnet, die sich dadurch unterscheiden, daß die Stützschenkel 18 ihrer Ständer 16 unterschiedliche Länge haben. Bei den Doppelparkern 12 mit niedrigerem Ständer 16 sind die Seitenbügel 22 in solcher Höhe angeordnet, daß die Vorderräder eines eingestellten Fahrzeugs auf dem Boden aufruhen. Bei den Doppelparkern 12' mit höherem Ständer 16 sind die Seitenbügel 22 dagegen nach oben höhenversetzt angeordnet, und zur Aufnahme der Vorderräder von einzustellenden Zweirädern ist zusätzlich beidseitig an den Stützschenkeln 18 jeweils ein Aufnahmebügel 26 angeordnet, in welchen die Vorderräder in einer vom Boden abgehobenen Lage eingestellt werden. Dadurch sind die beidseits vom Rahmen des Fahrrades seitlich vorstehenden Teile, insbesondere der Fahrradlenker, in aufeinanderfolgenden Parkern zueinander höhenversetzt, so daß die Doppelparker 12 und 12' näher zusammengerückt werden. Bei den in die Doppelparker 12' eingestellten Fahrrädern werden die Vorderräder durch die Aufnahmebügel 26 gegen seitliches Wegkippen im unteren Bereich und durch die Seitenbügel im oberen Bereich des Vorderrades gesichert. Bei den Doppelparkern 12 mit niedrigerer Höhe der Ständer 16 sind dagegen den Aufnahmebügeln 26 entsprechende Bügel nicht vorgesehen, da in diesem Bereich die die Stützschenkel 18 seitlich benachbarter Parker verbindenden Verbindungs-Rohrabschnitte 14 befestigt sind. Beim Einstellen eines Fahrrades in einen solchen Doppelparker 12 wird das Vorderrad also über den einstellseitigen Verbindungs-Rohrabschnitt 14 hinweggeschoben und steht dann in der bestimmungsgemäßen Einstellage zwischen den beiden Verbindungs-Rohrabschnitten auf dem Untergrund. Dadurch ist es denkbar, daß das eingestellte Vorderrad im Aufstandsbereich auf dem Boden seitlich verschoben werden kann und dann im Rahmen des zwischen dem Ständer und dem jeweiligen Seitenbügel gegebenen Spiels nach der einen oder anderen Seite wegkippen kann. Sofern dieses Kippen in Richtung zum Ständer erfolgt, wird das Vorderrad in seinem oberen Bereich mit der Schlauchdecke am Ständer angelehnt. Kippt das Fahrrad jedoch in entgegengesetzter Richtung, kann seine Felge an den Seitenbügeln zur Anlage kommen und beschädigt werden, insbesondere dann, wenn ein Benutzer eines seitlich anschließenden Einstellplatzes unachtsam vorgeht und das gekippte Fahrrad zur Verbesserung der Zugänglichkeit zu seinem Einstellplatz beiseite drückt. Es besteht somit ein Bedürfnis bei Reihenanlagen 10 dafür zu sorgen, daß die in die Doppelparker 12 eingestellten Fahrräder gegen unzulässiges seitliches Wegkippen, d.h. gegen zu starkes Kippen und gegen Verkippen in der falschen Richtung, nämlich vom Ständer 16 weg gesichert werden. Hierfür sind anstelle derbei den Doppelparkern 12' vorgesehenen Aufnahmebügel 26 im Befestigungsbereich der Verbindungs-Rohrabschnitte 14 mit den Stützschenkeln 18 in geeigneter Weise ausgebildete Verbindungselemente angeordnet, von denen mögliche Ausführungsformen nachstehend noch in Verbindung mit den Figuren 3 und 4, 5 bis 9, 10 bis 14 und 15 bis 18 beschrieben sind.

Figur 3 zeigt einen Stützschenkel 18 des Ständers 16 eines Doppelparkers 12, an welchem - in der Zeichnungsfigur auf der rechten Seite des Ständers 18 - in an sich bekannter Weise mittels einer Verbindungsmuffe 28 in geringem Abstand über dem Boden ein Verbindungs-Rohrabschnitt 14 befestigt ist, und zwar in Blickrichtung des Pfeils 3 in Fig. 2, d.h. von innen. Im Befestigungsbereich des Verbindungs-Rohrabschnitts 14, zu welchem in einer Reihenanlage 10 ein auf der gegenüberliegenden Seite in gleicher Weise am Stützschenkel 18 angebrachter - hier nicht dargestellter - Verbindungs-Rohrabschnitt 14 zu denken ist, ist ein Verbindungselement in Form eines Knotenblechs 30 angeordnet, das - wie auch aus Fig. 4 hervorgeht, in welcher das Knotenblech separat dargestellt ist - die grundsätzliche Form eines gleichschenkligen Dreiecks hat, dessen Hypotenuse bodenparallel in Höhe des Verbindungs-Rohrabschnitts 14 verläuft, während die Katheten von dem oberhalb der Hypotenuse mittig am Stützschenkel 18 vorgesehenen Dreieck-Scheitel aus schräg nach unten und außen bis unterhalb der in der Seitenansicht oben liegenden Mantellinie der Verbindungs-Rohrabschnitte 14 verlaufen und somit jeweils eine schräge Begrenzungskante 32 bilden, welche ein jeweils in den Zwischenraum zwischen dem Ständer 16 und einen Seitenbügel 22 eingeschobenes Vorderrad zwangsläufig in Richtung des tiefsten Punktes der Begrenzungskante 32 abrutschen lassen, so daß dem eingeschobenen Vorderrad und somit dem Fahrrad insgesamt eine Tendenz zum Kippen in Richtung des Ständers 16 aufgezwungen wird. Die die Begrenzungskanten 32 bildenden Katheten des Knotenblechs 30 sind nicht bis zur Hypotenuse geführt, sondern gehen in einen konkaven Bogen über, der in eine senkrecht nach oben verlaufende Begrenzungskante 34 eines am eigentlichen Dreiecks integral angeschnittenen, den jeweiligen Verbindungs-Rohrabschnitt 14 oben überragenden Ansatzes 36 übergeht. Die Begrenzungskante 34 bildet also eine Anschlagkante des einen Seitenanschlag für ein eingestelltes Vorderrad bildenden Ansatzes 36. D.h. ein Verkippen des Vorderrades innerhalb des Zwischenraumes zwischen dem Ständer 18 und dem Seitenbügel 22 ist nur so weit möglich, daß die Schlauchdecke des eingestellten Vorderrades an der Begrenzungskante 34 des Seitenanschlag-Ansatzes 36 anliegt. Dadurch ist sichergestellt, daß das Vorderrad nicht in eine seine Felge gefährdende Kipplage kommen kann.

Die Befestigung des Knotenblechs erfolgt durch - nicht gezeigte - Befestigungsschrauben, deren Gewindeschäfte durch in geringem Abstand oberhalb der Hypotenuse des Knotenblechs vorgesehene Langlöcher 38 hindurch in ein Gegengewinde im Verbindungs-Rohrabschnitt 14 bzw. der den Verbindungs-Rohrabschnitt 14 am Stützschenkel 18 befestigenden Verbindungsmuffe 28 eingeschraubt sind Hierdurch wird der Befestigungsbereich der Verbindungs-Rohrabschnitte 14 am jeweiligen Stützschenkel 18 über das Knotenblech 30 zusätzlich versteift, und zwar insbesondere dann, wenn zusätzliche eine Befestigungsschraube durch das in den Fig. 3 und 4 strichpunktiert angedeutete, im Scheitelbereich des dreieckigen Knotenblechs 30 vorgesehene Langloch 40 in eine Gewindebohrung im Stützschenkel 18 eingeschraubt wird. Neben der Aufgabe einer zwangsläufigen Führung und Halterung des Vorderrades eines eingestellten Fahrrades übernimmt das Knotenblech 30 also auch die Funktion einer zusätzlichen Verstärkung des Befestigungsbereichs von Verbindungs-Rohrabschnitten 14 und Stützschenkeln 18, so daß eine solche Reihenanlage 10 also auch den Beanspruchungen durch versehentlich anfahrende Kraftfahrzeuge oder bewußten Beschädigungsversuchen durch Einzelpersonen (Vandalismus) deutlich besser standhalten. Aufgrund dieser Verstärkungsfunktion kann es deshalb durchaus sinnvoll sein, Knotenbleche 30 nicht nur an den Doppelparkern 12, sondern auch im Verbindungsbereich der höheren Doppelparker 12' mit den anschließenden Verbindungs-Rohrabschnitten 14 vorzusehen, wobei die dann dort funktionslosen Seitenanschlag-Ansätze 36 entfallen können. Aus Gründen der Vereinfachung der Lagerhaltung und der Montagesicherheit kann es jedoch durchaus sinnvoll sein, auch in diesem Befestigungsbereich Knotenbleche der beschriebenen Art, d.h. mit Seitenanschlag-Ansätzen 36 vorzusehen.

Die Ausbildung der Durchgangsöffnungen für die Befestigungsschrauben als Langlöcher 38 bzw. 40 ermöglicht die Montage der Knotenbleche 30 auch dann, wenn die die Gewindeschäfte der Befestigungsschrauben aufnehmenden Gewindebohrungen nicht exakt in der vorgeschriebenen Lage gebohrt sind.

Die Begrenzungskanten 32 und 34 des Knotenblechs 30 sind nach dem Ausstanzen des Knotenblechs durch Beschleifen entgratet, wobei sich eine Abrundung bzw. ein Anfasen der Schnittkanten empfehlen kann, um Schnittverletzungen des Gummis der Schlauchdecken des Vorderrades von eingestellten Fahrrädern zu vermeiden. Darüber hinaus ist auch eine - in der Zeichnung nicht dargestellte - Ausgestaltung derart möglich, daß in den Bereichen der Begrenzungskanten 32 und 34, mit denen die Schlauchdecke eines eingestellten Vorderrades in Berührung kommen kann, am Blechmaterial des Knotenblechs 30 ein streifenförmiger Lappen angeschnitten ist, der dann nach dem Ausstanzen rechtwinklig oder sogar um etwas mehr als 90° umgekantet bzw. umgebogen wird. Dadurch wird nicht nur die jeweilige Begrenzungskante 32 bzw. 34 entschärft, sondern das Knotenblech 30 zusätzlich versteift.

In Figur 3 ist noch erkennbar, daß der lichte Abstand A zwischen dem Stützschenkel 18 und der Begrenzungsfläche 34 des Seitenanschlag-Ansatzes 36 größer als der lichte Abstand a bzw. der Zwischenraum zwischen dem Stützschenkel 18 und dem Seitenbügel 22 ist.

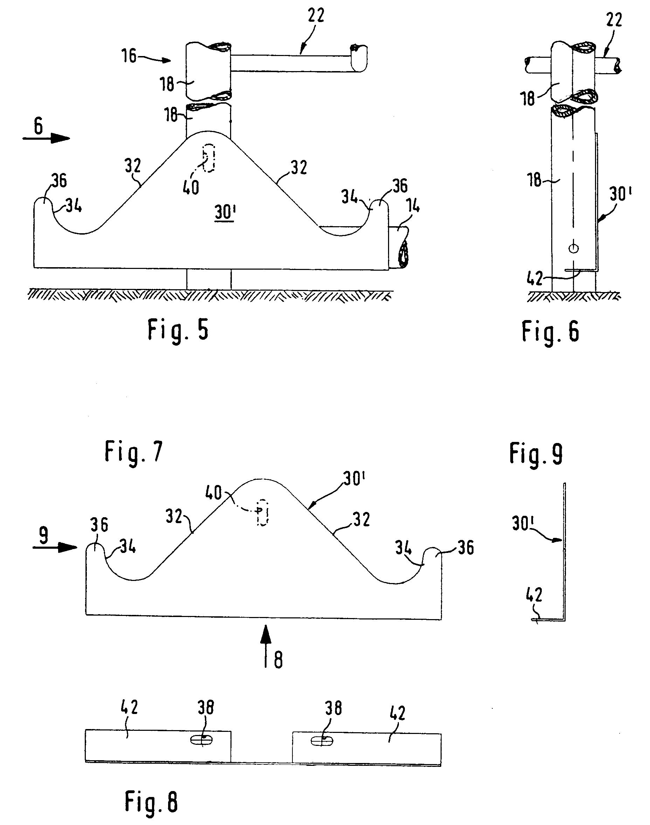

In den Fig. 5 und 6 ist die Verbindung eines Stützschenkels 18 eines Ständers 16 mit einem Verbindungs-Rohrabschnitt 14 mittels eines etwas abgewandelten Knotenblechs 30' gezeigt. Da das in den Fig. 7 bis 9 separat dargestellte Knotenblech 30' dem Knotenblech 30 weitgehend entspricht und in den Zeichnungsfiguren gleiche Teile mit gleichen Bezugszeichen versehen sind, werden nachstehend nur die gegenüber dem Knotenblech 30 getroffenen Abwandlungen des Knotenblechs 30' beschrieben, während für die übereinstimmenden Ausgestaltungen auf die vorausgehende Beschreibung des Knotenblechs 30 verwiesen werden kann.

In Fig. 5 ist erkennbar, daß die Hypotenuse des dreieckigen Knotenblechs etwas tiefer als die untere Mantelfläche des zu befestigenden Verbindungs-Rohrabschnitts 14 verläuft, was seine Ursache darin hat, daß an dieser Hypotenuse unterhalb jeder Kathete jeweils ein etwa rechtwinklig umgekanteter streifenförmiger Flanschabschnitt 42 angesetzt ist, zwischen denen lediglich der Bereich des Stützschenkels 18 ausgespart ist. Die umgekanteten Flanschabschnitte 42 liegen also an der Unterseite der jeweils am Stützschenkel 18 zu befestigenden Verbindungs-Rohrabschnitte 14 an, und die Langlöcher 38, mit denen das Knotenblech 30' an den Verbindungs-Rohrabschnitten befestigt wird, sind demzufolge auch in diesen Flanschabschnitten 42 vorgesehen. Durch die Flanschabschnitte 42 wird das Knotenblech 30' wieder zusätzlich versteift und die Lage der Befestigungsschrauben an der Unterseite der Verbindungs-Rohrabschnitte 14 erschwert Manipulation an den Befestigungsschrauben derart, daß die Knotenbleche abgenommen werden.

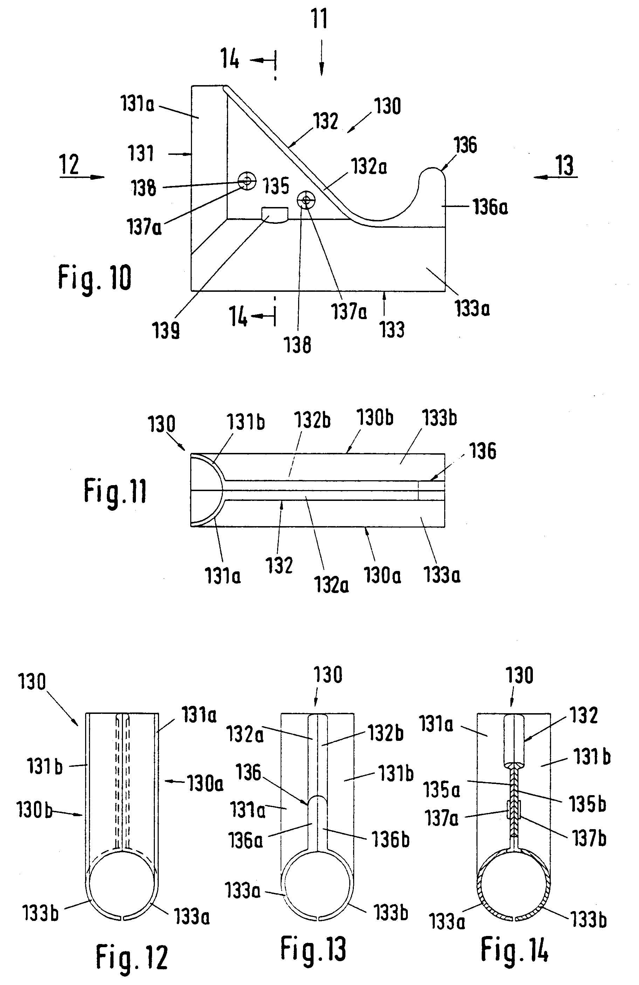

In den Figuren 10 bis 14 ist eine Alternative zu den vorstehend in Verbindung mit den Figuren 3 und 4 bzw. 5 bis 9 beschriebenen Knotenblechen 30 bzw. 30' dargestellt. Das an die Stelle dieser Knotenbleche tretende Verbindungselement 130 ist im dargestellten Fall ein aus zwei Teilen 130a, 130b hergestellter Kunststoff-Spritzgußteil, wobei aber in ähnlicher Ausgestaltung auch eine Herstellung aus Metall-Guß denkbar ist.

Das Verbindungselement 130 bzw. die Verbindungselement-Teile 130a, 130b ist bzw. sind ebenfalls grundsätzlich dreieckig, wobei hier jedoch eine Ausgestaltung gezeigt ist, die auch am endständigen Fahrradparker eine Reihenanlage einsetzbar ist, d.h. bei welchem also nur an einer Seite eines Stützschenkels 18 ein Verbindungs-Rohrabschnitt 14 angesetzt ist. Wenn am Stützschenkel 18 beidseitig auf gegenüberliegenden Seiten jeweils ein Verbindungs-Rohrabschnitt 14 angesetzt wird, ist zusätzlich ein zweites Verbindungselement 130 in einer um die linke senkrechte Kante symmetrisch gespiegelte Lage zu verwenden.

Fig. 10 zeigt eine Ansicht des Teils 130a des zweiteiligen Verbindungselements 130, wobei auf der nicht sichtbaren Rückseite des Teils 130a der nicht sichtbare spiegelbildliche Teil 130b aufgesetzt ist. Wie insbesondere in Fig. 10 hervorgeht, weist das Verbindungselement 130 die Form eines rechtwinkligen Dreiecks auf, dessen linke senkrechte Begrenzung von einem den zugeordneten Stützschenkel 18 seitlich hälftig umfassenden Klemmabschnitt 131 gebildet wird, der also im horizontalen Schnitt sich über einen Bogen bis zu 180° erstreckt, wobei der innere Radius des Klemmabschnitts 131 gleich dem äußeren Radius des Stützschenkels 18 ist. Der Klemmabschnitt 131 seinerseits setzt sich dann wieder aus Klemmabschnitt-Teilen 131a und 131b, welche jeweils Teil der Verbindungselement-Teile 130a bzw. 130b sind.

In ähnlicher Weise ist an der unteren waagerechten Begrenzung des Verbindungselements 130 ein Klemmabschnitt 133 angeformt, welcher der zugeordneten Verbindungs-Rohrabschnitt 14 klemmend umgreift, und zwar weitgehend vollständig, d.h. der Klemmabschnitt 133 erstreckt sich über - nahezu - 360°. Jeder Klemmabschnitt-Teil 133a bzw. 133b überdeckt also einen Bogen von - nahezu - 180°.

Vom oberen Ende des Klemmabschnitts 131 verläuft schräg nach unten in den Bereich des Endes des Klemmabschnitts 131 eine integral angeformte gerade Rippe 132, die sich wiederum aus zwei Rippenteilen 132a und 132b zusammensetzt. Die Oberseite dieser Rippe bildet die schräge Begrenzungskante, auf welcher das Vorderrad eines einzustellenden Fahrrades abgleitet, so daß das Fahrrad die zum Ständer 16 geneigte Lage annimmt. Der zwischen den Klemmabschnitten 131, 133 und der schrägen Rippe 132 eingeschlossene Raum ist nicht offen, sondern durch eine dünnere Wandung 135 geschlossen, die von zwei aufeinanderliegenden Wandungsteilen 135a, 135b halber Wandstärke gebildet werden.

Durch Verschrauben der Wandungsteile 135a, 135b mit (nicht gezeigten) Befestigungsschrauben werden die Verbindungselement-Teile 130a, 130b zum Verbindungselement 130 verbunden. Im dargestellten Fall sind hierfür zwei kreisförmig begrenzte von den Außenseiten der Wandungen 135a, 135b vortretende Verstärkungsaugen 137a, 137b vorgesehen, welche von Bohrungen 138 durchsetzt werden, durch welche die Gewindeschäfte der Befestigungsschrauben hindurch geführt werden.

Insbesondere bei Herstellung der Verbindungselemente aus Kunststoff sind aber auch andere Möglichkeiten der Verbindung der Teile 130a, 130b denkbar. So können beispielsweise in den aneinanderliegenden Flächen der Teile 130a, 130b des Verbindungselements ausgebildete druckknopfartige Rastelemente vorgesehen sein, welche ein einfaches Aufklipsen der Teile 130a, 130b des Verbindungselements 130 von der Vorder- und Rückseite des Verbindungsbereichs eines Stützschenkels 18 mit einem zugeordneten Verbindungs-Rohrabschnitt 14 ermöglichen.

Vom äußersten Ende des Klemmabschnitts 133 steht wiederum ein Seitenanschlag-Ansatz 136 vor, der sich wiederum aus aneinanderliegenden Teilen 136a, 136b zusammensetzt. In den Figuren 10 und 14 ist noch jeweils ein zum Teil in der Wandung 135 und zum Teil im Klemmabschnitt 133 vorgesehene Durchbruch 139 dargestellt, welcher dazu dient, den Kopf einer vom Verbindungsrohr-Abschnitt 14 nach oben vortretenden Befestigungsschraube aufzunehmen, mit welcher der Rohrabschnitt 14 über eine Verbindungsmuffe am Stützschenkel 18 befestigt ist. Der in den Durchbruch 139 ragende Kopf der Befestigungsschraube sichert das Verbindungselement 130 gleichzeitig in der bestimmungsgemäßen Befestigungsstellung gegen Verschiebungen in Längsrichtung des jeweiligen Verbindungsrohr-Abschnitts 14.

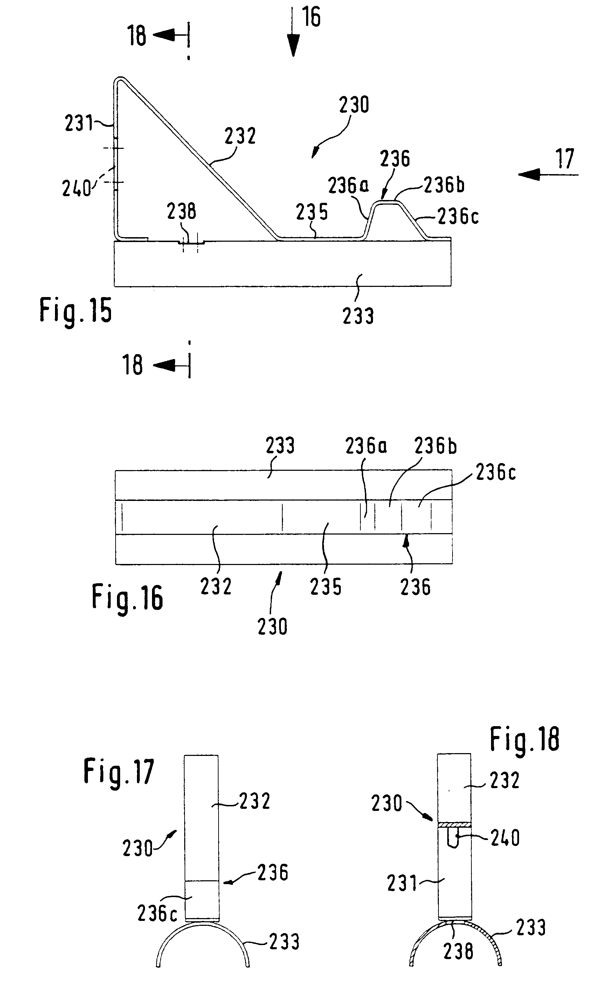

In den Figuren 15 bis 18 ist ein in seiner Gesamtheit mit 230 bezeichnetes Ausführungsbeispiel eines abgewandeltes Verbindungselements gezeigt, welches praktisch aus zwei Teilen zusammengesetzt ist, nämlich einem als im Querschnitt entsprechend dem Außendurchmesser der Verbindungs-Rohrabschnitte 14 gewölbte Fußplatte ausgebildeten langgestreckten Basiselement 233, welches also im Verbindungsbereich eines Verbindungs-Rohrabschnitts 14 mit einem Stützschenkel 18 auf dem Verbindungs-Rohrabschnitt aufsetzbar ist, auf welchem ein aus einem langgestreckten Metallprofil, und zwar im dargestellten Fall einem Flacheisen, durch Abkantung bzw. Umbiegen in eine Reihe von Metallprofil-Abschnitte unterteilter Bauteil aufgesetzt und befestigt ist, wobei diese Befestigung entweder durch Aufschweißen einzelner, auf der Oberseite des Basiselements aufliegender Abschnitte oder auch durch andere übliche Verbindungsmittel, wie Vernietung, Verschraubung o.dgl. erfolgen kann.

Insbesondere in Fig. 15 ist erkennbar, daß die schräg verlaufende und das Vorderrad eines in einen Parker einzuführenden Zweirades in die gewünschte Schräglage zwingende Begrenzungskante von der Oberseite eines Abschnitts 232 des Metallprofils gebildet wird, dessen eines - in Fig. 15 rechts gelegenes - Ende in einen auf dem Basisteil 233 befestigten abgewinkelten Zwischenabschnitt 235 übergeht, während von seinem anderen schräg nach oben zum Stützschenkel geführten Ende ein parallel zum Stützschenkel nach unten bis zum Basiselement 233 geführter und dort wieder befestigter Abschnitt 231 angesetzt ist.

Der den Seitenanschlag-Ansatz 236 bildende Profilmaterial-Abschnitt ist integral am Zwischenabschnitt 235 angesetzt und setzt sich aus Teilabschnitten zusammen, von denen der Teilabschnitt 236a vom Zwischenabschnitt 235 nach oben gekantet, der darauf folgende Teilabschnitt 236b etwa in die waagerechte Lage zurückgekantet und der nächst folgende Teilabschnitte 236c dann wieder schräg nach unten zum Basiselement 233 umgekantet und am Basiselement befestigt ist. Unterhalb des Profilmaterial-Abschnitts 232 ist mittig im Basiselement 233 eine - im dargestellten Fall als Langloch ausgebildete - Befestigungsbohrung 238 vorgesehen, durch welche hindurch der Schaft einer Befestigungsschraube hindurchschraubbar ist.

Für den Fall, daß zusätzlich eine Verbindung mit dem Stützschenkel 18 gefordert wird, kann zusätzlich im Profilmaterial-Abschnitt 231 eine dann zweckmäßig wiederum als Langloch ausgebildete Befestigungsbohrung 240 vorgesehen sein. Beim beschriebenen Verbindungselement 230 ist das für die Ausbildung der Metallprofil-Abschnitte verwendete Metallprofil ein Flacheisen. Es ist ersichtlich, daß anstelle eines solchen Flacheisens auch andere Metallprofile, beispielsweise Rundstähle oder Rohrprofile, verwendet werden können.

Es ist ersichtlich, daß im Rahmen des Erfindungsgedankens, wie er in den Ansprüchen definiert ist, Abwandlungen und Weiterbildungen der beschriebenen Ausführungsbeispiele verwirklichbar sind, welche sich insbesondere auf die Art und Weise der Befestigung der als Knotenbleche 30 bzw. 30' ausgebildeten Verbindungselemente, aber auch auf Ausgestaltung und Verbindungselemente selbst beziehen. Solche Verbindungselemente sind auch in der Weise vorstellbar, daß anstelle von Knotenblechen entsprechend gebogene Metallprofile an den Stützschenkeln 18 einerseits und den Verbindungs-Rohrabschnitten 14 andererseits direkt - d.h. ohne ein dem Basiselement 233 entsprechendes Trägerelement - befestigt werden, wobei jeweils lediglich darauf geachtet werden muß, daß entsprechend Anspruch 1 die Verbindungselemente die das Kippen eines in den Parker eingestellten Vorderrades in Richtung zum Ständer 16 beeinflussende schräg verlaufende Begrenzungskante aufweisen müssen, und daß entsprechend Anspruch 4 in geeignetem Abstand vom Stützschenkel jeweils ein Seitenanschlag-Ansatz mit einer Begrenzungskante nach oben vortritt, durch den ein zu starkes Kippen des Vorderrades verhindert wird.

## Patentansprüche

1. Fahrrad-Reihenanlage, aus einer Anzahl von Einzel- oder Doppel-Parkern, die jeweils einen in einer senkrechten Ebene angeordneten aus Rohrmaterial gebogenen Ständer aufweisen, der sich mit dem freien Ende wenigstens eines, vorzugsweise zweier Stützschenkel auf dem Boden abstützt oder in den Boden eingelassen ist, wobei einander zugeordnete Stützschenkel der Ständer benachbarter Parker durch horizontale Verbindungs-Rohrabschnitte verbunden sind, deren freie Enden jeweils am Stützschenkel eines der Parker befestigt sind,
**dadurch gekennzeichnet**,
daß im Befestigungsbereich der Verbindungs-Rohrabschnitte (14) mit den Stützschenkeln (18) ein im Bereich des jeweiligen Stützschenkels (18) über die Höhe der Rohrabschnitte (14) nach oben vorstehendes Verbindungselement (30; 30'; 130; 230) angeordnet ist, welches von seinem höchsten Punkt aus mit einer jeweils schräg verlaufenden Begrenzungskante (32; 132; 232) zu den anschließenden Verbindungs-Rohrabschnitten (14) herabgeführt ist.

2. Fahrradparker-Reihenanlage nach Anspruch 1, dadurch gekennzeichnet, daß das Verbindungselement an den Verbindungs-Rohrabschnitten (14) befestigt ist.

3. Fahrradparker-Reihenanlage nach Anspruch 1 oder 2, dadurch gekennzeichnet, daß das Verbindungselement am Stützschenkel (18) befestigt ist.

4. Fahrradparker-Reihenanlage nach einem der Ansprüche 1 bis 3, dadurch gekennzeichnet, daß die Verbindungselemente in ihrem zu den Verbindungs-Rohrabschnitten (14) herabgeführten Endbereichen mit jeweils einem über die Verbindungs-Rohrabschnitte (14) nach oben vortretenden, einen das seitliche Wegrutschen des Vorderrades eines eingestellten Fahrrades (24) verhindernden Seitenanschlag bildenden Ansatz (36; 136; 236) versehen sind.

5. Fahrradparker-Reihenanlage nach einem der Ansprüche 1 bis 4, dadurch gekennzeichnet, daß die Verbindungselemente als Knotenbleche (30; 30') ausgebildet sind, welche die grundsätzliche Form eines gleichschenkligen Dreiecks haben, dessen Hypotenuse im wesentlichen in Höhe der unteren Begrenzung der Verbindungs-Rohrabschnitte (14) verläuft, während die Katheten die schräg verlaufenden Begrenzungskanten (32) bilden.

6. Fahrradparker-Reihenanlage nach Anspruch 5, dadurch gekennzeichnet, daß die Seitenanschlag-Ansätze (36) im Bereich des Zusammentreffens der Katheten mit der Hypotenuse jeweils integral am Knotenblech (30; 30') angeschnitten sind.

7. Fahrradparker-Reihenanlage nach Anspruch 5 oder 6, dadurch gekennzeichnet, daß das Knotenblech (30; 30') jeweils mittels Befestigungsschrauben am Stützschenkel (18) und/oder den Verbindungs-Rohrabschnitten (14) befestigt ist, und daß die Gewindeschäfte der Befestigungsschrauben durch Durchgangsöffnungen im Knotenblech (30; 30') hindurch in den jeweiligen Stützschenkel bzw. Verbindungs-Rohrabschnitt eingeschraubt sind.

8. Fahrradparker-Reihenanlage nach einem der Ansprüche 5 bis 7, dadurch gekennzeichnet, daß im unteren hypotenusenseitigen Bereich des Knotenblechs (30') unterhalb jeder Kathete jeweils ein etwa rechtwinklig umgekanteter streifenförmiger Flanschabschnitt (42) angesetzt ist, welcher an der Unterseite der Verbindungs-Rohrabschnitte (14) anliegt.

9. Fahrradparker-Reihenanlage nach Anspruch 8, dadurch gekennzeichnet, daß die Durchgangsöffnungen im Knotenblech (30; 30') als Langlöcher (38; 40) ausgebildet sind.

10. Fahrradparker-Reihenanlage nach Anspruch 8 oder 9, bei welcher die Befestigung der Verbindungs-Rohrabschnitte (14) am zugeordneten Stützschenkel (18) des Ständers (16) durch am Stützschenkel (18) befestigte, passend in die offenen Enden der Verbindungs-Rohrabschnitte (14) eingreifende stopfenartige Verbindungsmuffen (28) erfolgt, dadurch gekennzeichnet, daß die Schäfte der Befestigungsschrauben durch Öffnungen (Langlöcher 38) im Knotenblech (30; 30') und dem jeweiligen Verbindungs-Rohrabschnitt (14) hindurch in eine Gewindebohrung in der jeweiligen Verbindungsmuffe (28) eingeschraubt sind.

11. Fahrradparker-Reihenanlage nach einem der Ansprüche 5 bis 10, dadurch gekennzeichnet, daß die von den Katheten des dreieckigen Knotenblechs (30; 30') gebildeten schräg verlaufenden Begrenzungskanten (32) und/oder die dem Stützschenkel (18) zugewandten Begrenzungskanten (34) der Seitenanschlag-Ansätze (36) entgratet und/oder angefast bzw. abgerundet sind.

12. Fahrradparker-Reihenanlage nach einem der Ansprüche 5 bis 10, dadurch gekennzeichnet, daß von den die Katheten des dreieckigen Knotenblechs (30; 30') bildenden schräg verlaufenden Begrenzungskanten einstückig angeschnittene Streifen des Blechmaterials umgekantet sind.

13. Fahrradparker-Reihenanlage nach einem der Ansprüche 5 bis 12, dadurch gekennzeichnet, daß von der dem Stützschenkel (18) zugewandten Begrenzungskante (34) des Seitenanschlag-Ansatzes (36) jeweils ein einstückig angeschnittener Streifen des Blechmaterials des Knotenblechs (30; 30') umgekantet ist.

14. Fahrradparker-Reihenanlage nach einem der Ansprüche 4 bis 13, bei welcher oberhalb der Verbindungs-Rohrabschnitte (14) an einem der Stützschenkel (18) des Ständers (16) jeweils ein das Vorderrad eines einzustellenden Fahrrades (24) auf der dem Ständer (16) gegenüberliegenden Seite umgreifender Seitenbügel (22) vorgesehen ist, dadurch gekennzeichnet, daß der lichte Abstand (A) der dem Stützschenkel (18) zugewandten Begrenzungskante (34) des Seitenanschlag-Ansatzes (36) vom zugeordneten Stützschenkel (18) wenigstens gleich dem lichten Abstand (a) zwischen dem Stützschenkel (18) und dem jeweiligen Seitenbügel (22) gewählt ist.

15. Fahrradparker-Reihenanlage nach einem der Ansprüche 1 bis 4, dadurch gekennzeichnet, daß die Verbindungselemente (130) als Kunststoff-Spritzgußteile ausgebildet sind.

16. Fahrradparker-Reihenanlage nach einem der Ansprüche 1 bis 4, dadurch gekennzeichnet, daß die Verbindungselemente (130) als Metall-Gußteile ausgebildet sind.

17. Fahrradparker-Reihenanlage nach Anspruch 15 oder 16, dadurch gekennzeichnet, daß die Verbindungselemente (130) derart zweiteilig ausgebildet sind, daß sie den Verbindungsbereich des jeweiligen Stützschenkels (18) mit dem Endbereich des anschließenden Verbindungs-Rohrabschnitts (14) jeweils an der Vorder- bzw. Rückseite zumindest teilweise übergreifen, und daß der vorder- und rückseitige Teil (130a; 130b) des Verbindungselements (130) in der bestimmungsgemäßen Befestigungsstellung miteinander verbunden sind.

18. Fahrradparker-Reihenanlage nach Anspruch 17, dadurch gekennzeichnet, daß die miteinander verbundenen vorder- und rückseitigen Teile (130a; 130b) des Verbindungselements (130) einen senkrechten, den Stützschenkel (18) über höchstens 180° seitlich umgreifenden und einen waagerechten, den zugeordneten Verbindungs-Rohrabschnitt (14) über mehr als 180° von der Oberseite aus umgreifenden Klemmabschnitt (131; 133) aufweisen, und daß die die schräge Begrenzungskante bildenden Abschnitte (132) sowie die den gegebenenfalls vorgesehenen Seitenanschlag-Ansatz (136) bildenden Abschnitte (136a; 136b) der Verbindungselement-Teile (130a; 130b) jeweils integral an den Klemmabschnitten (131; 133) angesetzt sind.

19. Fahrradparker-Reihenanlage nach Anspruch 17 oder 18, dadurch gekennzeichnet, daß die Verbindungselement-Teile (130a; 130b) in der bestimmungsgemäßen Befestigungsstellung im Verbindungsbereich des Stützschenkels (18) und des zugeordneten Verbindungs-Rohrabschnitts (14) miteinander verschraubt sind.

20. Fahrradparker-Reihenanlage nach Anspruch 17 oder 18, dadurch gekennzeichnet, daß die vorder- und rückseitigen Teile (130a; 130b) des Verbindungselements (130) in der bestimmungsgemäßen Befestigungsstellung durch formschlüssig ineinander eingreifende komplementäre Vorsprünge und Ausnehmungen miteinander verrastet sind.

21. Fahrradparker-Reihananlage nach einem der Ansprüche 1 bis 4, dadurch gekennzeichnet, daß das Verbindungselement (230) ein jeweils im Befestigungsbereich eines Verbindungs-Rohrabschnitts (14) mit dem zugeordneten Stützschenkel (18) auf dem Verbindungs-Rohrabschnitt aufsetzbares und an ihm befestigbares langgestrecktes Basiselement (233) aufweist, auf dessen dem Verbindungs-Rohrabschnitt abgewandter Oberseite ein Abschnitt (232) eines langgestreckten metallischen Profilmaterials befestigt ist, welcher von seinem vom Stützschenkel entfernten Befestigungsbereich auf dem Basiselelement (233) aus schräg nach oben zum Stützschenkel (18) verläuft und so mit seiner dem Basiselement (233) abgewandte Seite die schräg verlaufende Begrenzungskante bildet.

22. Fahrradparker-Reihenanlage nach Anspruch 21, dadurch gekennzeichnet, daß auf der stützschenkelabgewandten Seite des Befestigungsbereichs des schräg verlaufenden Profilmaterial-Abschnitts (232) auf dem Basiselement (233) ein ebenfalls von einem Abschnitt (236) eines metallischen Profilmaterials gebildeter, vom Basiselement vorstehender Seitenanschlag-Ansatz angeordnet ist.

23. Fahrradparker-Reihenanlage nach Anspruch 22, dadurch gekennzeichnet, daß der vom Basiselement (233) vorstehende, den Seitenanschlag-Ansatz bildende Profilelement-Abschnitt (236) von einer Reihe von Teilabschnitten (236a, 236b, 236c) gebildet wird, von denen der erste Teilabschnitt (236a) vom Basiselement nach oben vortritt, während der sich anschließende Teilabschnitt (236b) in Richtung vom schräg verlaufenden Profilelement-Abschnitt (232) weg und der nachfolgende Teilabschnitt (236c) zum Basiselement (233) zurückgekantet oder -gebogen und am Basiselement befestigt ist.

24. Fahrradparker-Reihenanlage nach einem der Ansprüche 21 bis 23, dadurch gekennzeichnet, daß am stützschenkelseitigen oberen Ende des die schräg verlaufende Begrenzungskante bildenden Profilmaterial-Abschnitts (232) ein parallel zum Stützschenkel (18) senkrecht nach unten bis zum Basiselement (233) geführter Abschnitt (231) des Profilmaterials angesetzt ist, dessen unteres Ende auf dem Basiselement (233) befestigt ist.

25. Fahrradparker-Reihenanlage nach Anspruch 24, dadurch gekennzeichnet, daß in dem parallel zum Stützschenkel (18) zum Basiselement (233) geführten Profilmaterial-Abschnitt (231) eine Befestigungsbohrung (240) für den Schaft einer in eine Bohrung des Stützschenkels (18) befestigbaren Befestigungsschraube o.dgl. vorgesehen ist.

26. Fahrradparker-Reihenanlage nach einem der Ansprüche 21 bis 25, dadurch gekennzeichnet, daß die Profilmaterial-Abschnitte (232; 236; 231) integrale Teile eines langgestreckten Metallprofils sind.

27. Fahrradparker-Reihenanlage nach einem der Ansprüche 21 bis 26, dadurch gekennzeichnet, daß das Basiselement (233) von einer in ihrem Querschnitt kreisabschnittsförmig gewölbten metallischen Fußplatte gebildet wird, wobei der Radius der dem Verbindungs-Rohrabschnitt (14) zugewandten Seite der Fußplatte etwa gleich dem Radius der Außenfläche des zugeordneten Verbindungs-Rohrabschnitts (14) gewählt ist.

28. Fahrradparker-Reihenanlage nach Anspruch 27, dadurch gekennzeichnet, daß die kreisabschnittsförmige Wölbung des Querschnitts der das Basiselement (233) bildenden Fußplatte sich über einen Winkel von maximal 180° erstreckt.

29. Fahrradparker-Reihenanlage nach einem der Ansprüche 21 bis 28, dadurch gekennzeichnet, daß das Basiselement (233) im Bereich unterhalb des schräg verlaufenden Profilmaterial-Abschnitts (232) etwa mittig mit einer Befestigungsbohrung (238) für den Schaft einer Befestigungsschraube versehen ist.

30. Fahrradparker-Reihenanlage nach Anspruch 29, dadurch gekennzeichnet, daß die Befestigungsbohrung (238) im Basiselement (233) in ihrer Lage so gewählt ist, daß sie mit einer Befestigungsbohrung im zugeordneten Verbindungs-Rohrabschnitt (14) fluchtet.

31. Fahrradparker-Reihenanlage nach Anspruch 29 oder 30, dadurch gekennzeichnet, daß die Befestigungsbohrung (238) im Basiselement (233) als parallel zur Längsmittelachse des zugeordneten Verbindungs-Rohrabschnitts (14) verlaufendes Langgloch ausgebildet ist.

32. Fahrradparker-Reihenanlage nach Anspruch 26, dadurch gekennzeichnet, daß das Metallprofil von einem Flach-, Rund- oder Rohrprofil gebildet wird.

## Claims

1. Support for bicycles in a row comprising a number of individual or double parkers, which have a respective stand, which is bent out of tubular material and is arranged in a vertical plane and which is supported on the ground with the free end of at least one, preferably two, support limbs or is set into the ground, associated support limbs of the stands of adjacent parkers being connected by horizontal connecting tube sections, the free ends of which are each secured to the support limb of one of the parkers, characterised in that arranged in the securement region of the connecting tube sections (14) with the support limbs (18) there is a connecting element (30; 30'; 130; 230) which projects upwardly in the region of the respective support limb (18) above the height of the tube sections (14) and which extends down from its highest point with an obliquely extending boundary edge (32; 132; 232) to the adjoining connecting tube sections (14).

2. Support for parking bicycles in a row as claimed in Claim 1, characterised in that the connecting element is secured to the connecting tube sections (14).

3. Support for parking bicycles in a row as claimed in Claim 1 or 2, characterised in that the connecting element is secured to the support limb (18).

4. Support for parking bicycles in a row as claimed in one of Claims 1 to 3, characterised in that the connecting elements are provided in their end regions extending down to the connecting tube sections (14) with a respective upwardly projecting projection (36; 136; 236) which constitutes a side abutment which prevents lateral slipping away of the front wheel of a parked bicycle (24).

5. Support for parking bicycles in a row as claimed in one of Claims 1 to 4, characterised in that the connecting elements are constructed in the form of fishplates (30; 30'), which have the basic shape of an isosceles triangle, the hypotenuse of which extends substantially at the height of the lower margin of the connecting tube sections (14) whilst the short sides constitute the obliquely extending boundary edges (32).

6. Support for parking bicycles in a row as claimed in Claim 5, characterised in that the side abutment projections (36) are integrally gated on the fishplate (30; 30') in the region of the intersection of the short sides with the hypotenuse.

7. Support for parking bicycles in a row as claimed in Claim 5 or 6, characterised in that each fishplate (30; 30') is secured by means of fastening screws to the support limb (18) and/or the connecting tube sections (14) and that the threaded shafts of the fastening screws are screwed into the respective support limb or connecting tube section through holes in the fishplate (30; 30').

8. Support for parking bicycles in a row as claimed in one of Claims 5 to 7, characterised in that fastened in the lower region of the fishplate (30') in the vicinity of the hypotenuse below each short side there is a respective strip-shaped flange section (42), which is bent over approximately at right angles and which engages the underside of the connecting tube sections (14).

9. Support for parking bicycles in a row as claimed in Claim 8, characterised in that the holes in the fishplate (30; 30') are constructed as elongate holes (38; 40).

10. Support for parking bicycles in a row as claimed in Claim 8 or 9 in which the fastening of the connecting tube sections (14) on the associated support limb (18) of the stand (16) is effected by stopper-like connecting sleeves (28), which are secured to the supporting limb (18) and engage fittingly in the open ends of the connecting tube sections (14), characterised in that the shafts of the fastening screws are screwed through openings (elongate holes 38) in the fishplate (30; 30') and the respective connecting tube section (14) into a threaded bore in the respective connecting sleeve (28).

11. Support for parking bicycles in a row as claimed in one of Claims 5 to 10, characterised in that the obliquely extending boundary edges (32) defined by the short sides of the triangular fishplate (30; 30') and/or the boundary edges (34), which are directed towards the support limb (18), of the side abutment projections (36) are deburred and/or chamfered or rounded.

12. Support for parking bicycles in a row as claimed in one of Claims 5 to 10, characterised in that integrally gated strips of the plate material are bent over from the obliquely extending boundary edges constituting the short sides of the triangular fishplate (30; 30').

13. Support for parking bicycles in a row as claimed in one of Claims 5 to 12, characterised in that a respective integrally gated strip of the plate material of the fishplate (30; 30') is bent over from the boundary edge (34) of the side abutment projection (36) directed towards the support limb (18).

14. Support for parking bicycles in a row as claimed in one of Claims 4 to 13 in which provided above the connecting tube sections (14) on one of the support limbs (18) of the stand (16) there is a respective side (22) which engages around the front wheel of a bicycle (24) to be parked on the side opposite to the stand (16), characterised in that the free spacing (A) of the boundary edge (34), which is directed towards the support limb (18), of the side abutment projection (36) from the associated support limb (18) is at least equal to the free spacing (a) between the support limb (18) and the respective side bracket (22).

15. Support for parking bicycles in a row as claimed in one of Claims 1 to 4, characterised in that the connecting elements (130) are constructed as injection moulded plastic components.

16. Support for parking bicycles in a row as claimed in one of Claims 1 to 4, characterised in that the connecting elements (130) are constructed as metal castings.

17. Support for parking bicycles in a row as claimed in Claim 15 or 16, characterised in that the connecting elements (130) are constructed in two parts so that they at least partially engage over the connection region of the respective support limb (18) with the end region of the adjoining connecting tube section (14), at the front or rear surface in each case, and that the front and rear portion (130a; 130b) of the connecting element (130) are connected together in the predetermined fastened position.

18. Support for parking bicycles in a row as claimed in Claim 17, characterised in that the front and rear portions (130a; 130b), which are connected together, of the connecting element (130) have a vertical clamping section (131) which laterally engages around the support limb (18) over at most 180°, and a horizontal clamping section (133), which engages around the associated connecting tube section (14) over more than 180° from the upper surface, and that the sections (132), which constitute the oblique boundary edge, and the sections (136a; 136b) of the connecting element portions (130a; 130b) constituting the optionally provided side abutment projection (136) are integrally attached to the clamping sections (131; 133).

19. Support for parking bicycles in a row as claimed in Claim 17 or 18, characterised in that the connecting element portions (130a; 130b) are screwed together in the predetermined fastened position in the connecting region of the support limb (18) and the associated connecting tube section (14).

20. Support for parking bicycles in a row as claimed in Claim 17 or 18, characterised in that the front and rear portions (130a; 130b) of the connecting element (130) are locked together in the predetermined fastened position by form-locking complementary projections and recesses which engage in one another.

21. Support for parking bicycles in a row as claimed in one of Claims 1 to 4, characterised in that in the fastening region of a connecting tube section (14) with the associated support limb (18) the connecting element (230) has an elongate base element (233), which may be placed on the connecting tube section and fastened to it and connected to whose upper surface directed away from the connecting tube section there is a section (232) of an elongate metallic profiled material which extends from its fastening region, remote from the support limb, on the base element (233) obliquely upwardly to the support limb (18) and thus constitutes with its side which is directed away from the base element (233) the obliquely extending boundary edge.

22. Support for parking bicycles in a row as claimed in Claim 21, characterised in that arranged on the side, which is directed away from the support limb, of the fastening region of the obliquely extending profiled material section (232) on the base element (233) there is a side abutment projection which projects from the base element and is also constituted by a section (236) of a metallic profiled material.

23. Support for parking bicycles in a row as claimed in Claim 22, characterised in that the profiled element section (236), which projects from the base element (233) and constitutes the side abutment projection, is constituted by a series of component sections (236a, 236b, 236c), of which the first component section (236a) projects upwardly from the base element whilst the adjoining component section (236b) is turned or bent over in the direction away from the obliquely extending profiled element section (232) and the subsequent component section (236c) is turned or bent over towards the base element (233) and is fastened to the base element.

24. Support for parking bicycles in a row as claimed in one of Claims 21 to 23, characterised in that attached to the upper end on the support limb side of the profiled material section (232) constituting the obliquely extending boundary edge there is a section (231), which extends parallel to the support limb (18) vertically downwardly to the base element (233), of the profiled material, the lower end of which is fastened to the base element (233).

25. Support for parking bicycles in a row as claimed in Claim 24, characterised in that provided in the profiled material section (231) extending to the base element (233) parallel to the support limb (18) there is a fastening bore (240) for the shaft of a fastening screw or the like which may be fastened in a bore in the support limb (18).

26. Support for parking bicycles in a row as claimed in one of Claims 21 to 25, characterised in that the profiled material sections (232; 236; 231) are integral components of an elongate metal profile.

27. Support for parking bicycles in a row as claimed in one of Claims 21 to 26, characterised in that the base element (233) is constituted by a metallic footplate which is of circular section domed shape in cross-section, the radius of the side of the footplate directed towards the connecting tube section (14) being approximately equal to the radius of the external surface of the associated connecting tube section (14).

28. Support for parking bicycles in a row as claimed in Claim 27, characterised in that the circular section domed shape of the cross-section of the footplate constituting the base element (233) extends over an angle of at most 180°.

29. Support for parking bicycles in a row as claimed in one of Claims 21 to 28, characterised in that the base element (233) is provided in the region below the obliquely extending profiled material section (232) approximately centrally with a fastening bore (238) for the shaft of a fastening screw.

30. Support for parking bicycles in a row as claimed in Claim 29, characterised in that the position of the fastening bore (238) in the base element (233) is so selected that it is in alignment with a fastening bore in the associated connecting tube section (14).

31. Support for parking bicycles in a row as claimed in Claim 29 or 30, characterised in that the fastening bore (238) in the base element (233) is constructed as an elongate hole extending parallel to the longitudinal central axis of the associated connecting tube section (14).

32. Support for parking bicycles in a row as claimed in Claim 26, characterised in that the metallic profile is constituted by a flat, round or tubular profile.

## Revendications

1. Installation de rangement de bicyclettes, constituée d'une pluralité de dispositifs de parcage individuels ou doubles, présentant chacun un support disposé dans un plan vertical et constitué par cintrage-pliage d'un matériau tubulaire, qui prend appui sur le sol par l'extrémité libre d'au moins un, de préférence, de deux branches d'appui, ou bien est inséré dans le sol, où des branches d'appui, associées les unes les autres, des supports de dispositifs de parcage voisins sont reliées par des tronçons tubulaires de liaison horizontaux, dont les extrémités libres sont chacune fixées sur la branche d'appui de l'un des dispositifs de parcage, caractérisée par le fait que, dans la zone de fixation des tronçons tubulaires de liaison (14) aux branches d'appui (18), est disposé, dans la zone de la branche d'appui (18) respective, un élément de liaison (30; 30'; 130; 230) faisant saillie vers le haut au-dessus de la hauteur des tronçons tubulaires (14), élément de liaison qui, depuis son point le plus haut, est amené, en descendant aux tronçons tubulaires de liaison (14) connexes avec une arête de délimitation (32; 132; 232) respective, s'étendant obliquement.

2. Installation de rangement à dispositifs de parcage de bicyclettes selon la revendication 1, caractérisée par le fait que l'élément de liaison est fixé aux tronçons tubulaires de liaison (14).

3. Installation de rangement à dispositifs de parcage de bicyclettes selon la revendication 1 ou 2, caractérisée par le fait que l'élément de liaison est fixé sur la branche d'appui (18).

4. Installation de rangement à dispositifs de parcage de bicyclettes selon l'une des revendications 1 à 3, caractérisée par le fait que les éléments de liaison sont chacun pourvus, dans leurs zones d'extrémité amenées en descendant aux tronçons tubulaires de liaison (14), d'un appendice (36; 136; 236) faisant saillie vers le haut au-dessus des tronçons tubulaires de liaison (14), en constituant une butée latérale empêchant tout échappement latéral de la roue avant d'une bicyclette (24) ayant été déposée.

5. Installation de rangement à dispositifs de parcage de bicyclettes selon l'une des revendications 1 à 4, caractérisée par le fait que les éléments de liaison sont réalisés sous forme de plaques d'éclissage (30, 30') qui ont la forme de base d'un triangle isocèle, dont l'hypoténuse s'étend sensiblement au niveau de la limitation inférieure des tronçons tubulaires de liaison (14), tandis que les côtés de l'angle droit constituent les arêtes de limitation (32) s'étendant obliquement.

6. Installation de rangement à dispositifs de parcage de bicyclettes selon la revendication 5, caractérisée par le fait que les appendices de butée latérale (36) sont, dans la zone de jonction entre les côtés de l'angle droit et l'hypoténuse, taillé chacun d'une seule pièce avec la plaque d'éclissage (30; 30').

7. Installation de rangement à dispositifs de parcage de bicyclettes selon la revendication 5 ou 6, caractérisée par le fait que chacune des plaques d'éclissage (30, 30') est fixée, au moyen de vis de fixation, sur la branche d'appui (18) et/ou les tronçons tubulaires de liaison (14), et que les tiges filetées des vis de fixation, passant par des ouvertures de passage ménagées dans la plaque d'éclissage (30; 30'), sont vissées dans la branche d'appui respective ou le tronçon tubulaire de liaison respectif.

8. Installation de rangement à dispositifs de parcage de bicyclettes selon l'une des revendications 5 à 7, caractérisée par le fait que, dans la zone inférieure, située côté hypoténuse, de la plaque d'éclissage (30') est appliquée, au-dessous de chaque côté de l'angle droit, respectivement, une section de rebord (42) en forme de bande rabattue à angle droit, qui s'appuie sur la face inférieure des tronçons tubulaires de liaison (14).

9. Installation de rangement à dispositifs de parcage de bicyclettes selon la revendication 8, caractérisée par le fait que les ouvertures de passage ménagées dans la plaque d'éclissage (30, 30') sont réalisées sous forme de trous oblongs (38; 40).

10. Installation de rangement à dispositifs de parcage de bicyclettes selon la revendication 8 ou 9, dans laquelle la fixation des tronçons tubulaires de liaison (14) sur la branche d'appui (18) associée du support (16) s'effectue au moyen de manchons de liaison (28) du genre bouchons, s'engageant avec ajustement dans les extrémités ouvertes des tronçons tubulaires de liaison (14), caractérisé par le fait que les tiges des vis de fixation, passant par des ouvertures (trous oblongs 38) ménagées dans la plaque d'éclissage (30, 30') et le tronçon tubulaire de liaison (14) respectif, sont vissées dans un trou taraudé ménagé dans le manchon de liaison (28) respectif.

11. Installation de rangement à dispositifs de parcage de bicyclettes selon l'une des revendications 5 à 10, caractérisée par le fait que les arêtes de délimitation (32) s'étendant obliquement, constituées par les côtés de l'angle droit de la plaque d'éclissage (30; 30') triangulaire, et/ou les arêtes de délimitation (34), tournées vers la branche d'appui (18) et appartenant aux appendices de butée latérale (36), sont ébavurées et/ou chanfreinées, respectivement arrondies.

12. Installation de rangement à dispositifs de parcage de bicyclettes selon l'une des revendications 5 à 10, caractérisée par le fait que des bandes du matériau en tôle, découpées pliées à arête vive d'une seule pièce à partir des arêtes de délimitation s'étendant obliquement et constituant les côtés d'angle droit de la plaque d'éclissage (30; 30') triangulaire.

13. Installation de rangement à dispositifs de parcage de bicyclettes selon l'une des revendication 5 à 12, caractérisée par le fait que, à partir de l'arête de délimitation (34) tournée vers la branche d'appui (18), de l'appendice de butée latérale (36), est pliée à arête vive chaque fois une bande, coupée d'une seule pièce, du matériau en tôle de la plaque d'éclissage (30; 30').

14. Installation de rangement à dispositifs de parcage de bicyclettes selon l'une des revendications 4 à 13, dans laquelle au-dessus des tronçons tubulaires de liaison (14), sur l'une des branches d'appui (18) du support (16), est respectivement prévu un étrier latéral (22) entourant la roue avant d'une bicyclette (24) à installer, du côté opposé au support (16), caractérisée par le fait que la distance libre (A) de l'arête de limitation (34), tournée vers la branche d'appui (18), de l'appendice de butée latérale (36) de la branche d'appui (18) associée est choisie au moins égale à la distance libre (a) qu'il y a entre la branche d'appui (18) et l'étrier latéral (22) respectif.

15. Installation de rangement à dispositifs de parcage de bicyclettes selon l'une des revendications 1 à 4, caractérisée par le fait que les éléments de liaison (130) sont réalisés sous forme de pièces moulées par injection en matière plastique.

16. Installation de rangement à dispositifs de parcage de bicyclettes selon l'une des revendications 1 à 4, caractérisée par le fait que les éléments de liaison (130) sont réalisés sous forme de pièces moulées métalliques.

17. Installation de rangement à dispositifs de parcage de bicyclettes selon la revendication 15 ou 16, caractérisée par le fait que les éléments de liaison (130) sont réalisés en deux parties, de manière qu'elles chevauchent au moins partiellement sur la face avant ou la face arrière de la zone de liaison de la branche d'appui (18) respective avec la zone d'extrémité du tronçon tubulaire de liaison (14) connexe et que la partie avant et la partie arrière (130a; 130b) de l'élément de liaison (130) sont reliés ensemble dans la position de fixation conforme.

18. Installation de rangement à dispositifs de parcage de bicyclettes selon la revendication 17, caractérisée par le fait que les parties avant et arrière (130a; 130b) reliées ensemble de l'élément de liaison (130) présentent une section de serrage (131; 133) verticale, entourant latéralement la branche d'appui (18) sur au plus 180°, et une section de serrage (131; 133) horizontale, entourant le tronçon tubulaire de liaison (14) associé, par le côté supérieur, sur plus de 180°, et que les tronçons (132) constituant l'arête de liaison oblique ainsi que les tronçons (136a; 136b) constituant l'appendice de butée latérale (136), prévu le cas échéant, des parties d'élément de liaison (130a; 130b) sont chaque fois appliqués d'une seule pièce sur les sections de serrage (131; 133).

19. Installation de rangement à dispositifs de parcage de bicyclettes selon la revendication 17 ou 18, caractérisée par le fait que les parties d'élément de liaison (130a; 130b) sont vissées ensemble dans la position de fixation conforme, dans la zone de liaison de la branche d'appui (18) et du tronçon tubulaire de liaison (14) associé.

20. Installation de rangement à dispositifs de parcage de bicyclettes selon la revendication 17 ou 18, caractérisée par le fait que les parties côté avant et côté arrière (130a; 130b) de l'élément de liaison (130) sont encliquetées ensemble, au moyen de saillies et d'évidements complémentaires s'engageant les uns dans les autres avec ajustement de forme, lorsqu'on est dans la position de fixation conforme.

21. Installation de rangement à dispositifs de parcage de bicyclettes selon l'une des revendications 1 à 4, caractérisée par le fait que l'élément de liaison (230) présente un élément de base (233) de forme allongée, susceptible d'être appliqué sur le tronçon tubulaire de liaison chaque fois dans la zone de fixation d'un tronçon tubulaire de liaison (14) à la branche d'appui (18) associée et susceptible d'être fixé sur lui, élément de base sur la face supérieure, opposée au tronçon tubulaire de liaison, duquel est fixé un tronçon (232) appartenant à un matériau profilé métallique allongé, qui s'étend obliquement vers le haut vers la branche d'appui (18) depuis sa zone de fixation distante de la branche d'appui, sur l'élément de base (233) et constitue ainsi l'arête de délimitation s'étendant obliquement par sa face opposée à l'élément de base (233).

22. Installation de rangement à dispositifs de parcage de bicyclettes selon la revendication 21, caractérisée par le fait que du côté, opposé à la branche d'appui, de la zone de fixation, du tronçon de matériau profilé (232) s'étendant obliquement est disposé sur l'élément de base (233) un appendice de butée latérale constitué également par un tronçon (236) d'un matériau profilé métallique et faisant saillie depuis l'élément de base.

23. Installation de rangement à dispositifs de parcage de bicyclettes selon la revendication 22, caractérisée par le fait que le tronçon d'élément profilé (236), faisant saillie de l'élément de base (233) et constituant l'appendice de butée latérale, est formé par une rangée de tronçons partiels (236a; 236b; 236c), dont le premier tronçon partiel (236a) se projette vers le haut depuis l'élément de base, tandis que le tronçon partiel (236b) connexe est écarté dans la direction venant du tronçon d'élément profilé (232) s'étendant obliquement, et le tronçon partiel (236c) subséquent est ramené, par pliage ou cintrage, vers l'élément de base (233) et fixé sur l'élément de base.

24. Installation de rangement à dispositifs de parcage de bicyclettes selon l'une des revendications 21 à 23, caractérisée par le fait que, sur l'extrémité supérieure, située côté branche d'appui, du tronçon de matériau profilé (232) constituant l'arête de délimitation s'étendant obliquement est appliqué un tronçon (231), guidé parallèlement à la branche d'appui (18), perpendiculairement vers le bas jusqu'à l'élément de base (233) et constitué du matériau profilé, tronçon dont l'extrémité inférieure est fixée sur l'élément de base (233).

25. Installation de rangement à dispositifs de parcage de bicyclettes selon la revendication 24, caractérisée par le fait que dans le tronçon de matériau profilé (231), amené parallèlement à la branche d'appui (18) vers l'élément de base (233), est prévu un passage de fixation (240), destiné à la tige d'une vis de fixation ou analogue, susceptible d'être fixée dans un perçage de la branche d'appui (18).

26. Installation de rangement à dispositifs de parcage de bicyclettes selon l'une des revendications 21 à 25, caractérisée par le fait que les tronçons en matériau profilé (232; 236; 231) sont des parties intégrales d'un profilé métallique de forme allongée.

27. Installation de rangement à dispositifs de parcage de bicyclettes selon l'une des revendications 21 à 26, caractérisée par le fait que l'élément de base (233) est constitué par une plaque de pied métallique à section transversale cintrée en forme de section de cercle, le rayon de la face, tourné vers le tronçon tubulaire de liaison (14), de la plaque de pied étant choisi à peu près égal au rayon de la surface extérieure du tronçon tubulaire de liaison (14) associé.

28. Installation de rangement à dispositifs de parcage de bicyclettes selon la revendication 27, caractérisée par le fait que le cintrage en forme d'anneau de cercle de la section transversale de la plaque de pied constituant l'élément de base (233) s'étend sur un angle faisant au maximum 180°.

29. Installation de rangement à dispositifs de parcage de bicyclettes selon l'une des revendications 21 à 28, caractérisée par le fait que l'élément de base (233) est pourvu, dans la zone se trouvant au-dessous du tronçon en matériau profilé (232) s'étendant obliquement, à peu près centralement, d'un perçage de fixation (238) destiné à la tige d'une vis de fixation.

30. Installation de rangement à dispositifs de parcage de bicyclettes selon la revendication 29, caractérisée par le fait que la position du perçage de fixation (238) ménagé dans l'élément de base (233) est choisie de manière à ce qu'il soit aligné vis-à-vis d'un perçage de fixation ménagé dans un tronçon tubulaire de liaison (14) associé.

31. Installation de rangement à dispositifs de parcage de bicyclettes selon la revendication 29 ou 30, caractérisée par le fait que le perçage de fixation (238) ménagé dans l'élément de base (233) est réalisé sous forme de trous oblongs s étendant parallèlement à l'axe longitudinal médian du tronçon tubulaire de liaison (14) associé.

32. Installation de rangement à dispositifs de parcage de bicyclettes selon la revendication 26, caractérisée par le fait que le profil métallique est constitué par un profilé plat, rond ou tubulaire.
